# EUROPEAN PATENT APPLICATION

(11) **EP 4 648 446 A1**
(43) Date of publication of application: **12.11.2025**
(21) Application number: 24750374.1
(22) Date of filing: 01.02.2024
(51) Int. Cl.: H04W 4/06, H04W 76/27

(54) **COMMUNICATION METHOD**

(30) Priority: 03.02.2023 US 202363443083 P
(71) Applicant: Kyocera Corporation, Kyoto-shi, Kyoto 612-8501 (JP)
(72) Inventor: FUJISHIRO, Masato, Kyoto-shi, Kyoto 612-8501 (JP); CHANG, Henry, San Diego, California 92123 (US)
(74) Representative: Viering, Jentschura & Partner mbB Patent- und Rechtsanwälte
(86) International application number: PCT/JP2024/003196
(87) International publication number: WO 2024/162425

(57) **Abstract**

A communication method used in a mobile communication system for providing a multicast/broadcast service (MBS) includes receiving, by a user equipment in a radio resource control (RRC) connected state and having joined a multicast session, a point-to-multipoint (PTM) configuration for the multicast session on a dedicated control channel (DCCH) from a base station. The receiving includes receiving, on the DCCH from the base station, the PTM configuration including an information element that is the same as an information element provided on a multicast control channel (MCCH) when the multicast session is activated.

## Description

### TECHNICAL FIELD

The present disclosure relates to a communication method used in a mobile communication system.

### BACKGROUND OF INVENTION

The 3rd Generation Partnership Project (3GPP) has defined the technical specifications of New Radio (NR) that is a radio access technology of the fifth generation (5G). NR has features such as high speed, large capacity, high reliability, and low latency as compared to Long Term Evolution (LTE) that is a radio access technology of the fourth generation (4G). The 3GPP has defined technical specifications of multicast/broadcast services (MBS) of 5G/NR.

In 3GPP Release 17, MBS multicast reception (i.e., multicast reception) is possible only for a user equipment in a radio resource control (RRC) connected state (see, for example, Non-Patent Document 1). On the other hand, in 3GPP Release 18, technical specifications are scheduled to be extended so that a user equipment in an RRC inactive state can perform multicast reception.

### CITATION LIST

### NON-PATENT LITERATURE

Non-Patent Document 1: 3GPP Technical Specification: TS 38.300 V17.3.0

### SUMMARY

A communication method according to a first aspect is a communication method used in a mobile communication system for providing a multicast/broadcast service (MBS), the communication method including receiving, by a user equipment in a radio resource control (RRC) connected state, a point-to-multipoint (PTM) configuration for a multicast session on a dedicated control channel (DCCH) from a base station. The receiving includes receiving, on the DCCH from the base station, the PTM configuration including an information element that is the same as an information element provided on a multicast control channel (MCCH) when the multicast session is activated.

A communication method according to a second aspect is a communication method used in a mobile communication system for providing a multicast/broadcast service (MBS), the communication method including receiving, by a user equipment in a radio resource control (RRC) connected state and having joined a multicast session, configuration information on a dedicated control channel (DCCH) from a base station. The receiving includes receiving, from the base station, configuration information relating to permission for multicast reception in an RRC inactive state when the multicast session is not yet activated.

### BRIEF DESCRIPTION OF THE DRAWINGS

FIG. 1 is a diagram illustrating a configuration of a mobile communication system according to an embodiment.
FIG. 2 is a diagram illustrating a configuration of a user equipment (UE) according to an embodiment.
FIG. 3 is a diagram illustrating a configuration of a gNB (base station) according to an embodiment.
FIG. 4 is a diagram illustrating a configuration of a protocol stack of a radio interface of a user plane handling data.
FIG. 5 is a diagram illustrating a configuration of a protocol stack of a radio interface of a control plane handling signaling (control signal).
FIG. 6 is a diagram illustrating an MBS broadcast configuration (MBSBroadcastConfiguration) message in an MCCH defined in the RRC Technical Specifications (TS38. 331).
FIG. 7 is a diagram illustrating an overview of an operation of enabling a UE 100 in an RRC inactive state to perform multicast reception.
FIG. 8 is a diagram for describing an overview of operations according to a first embodiment.
FIG. 9 is a diagram illustrating an example of a first operation pattern according to the first embodiment.
FIG. 10 is a diagram illustrating an example of a second operation pattern according to the first embodiment.
FIG. 11 is a diagram illustrating an example of a first operation pattern according to a second embodiment.
FIG. 12 is a diagram illustrating an example of a second operation pattern according to the second embodiment.
FIG. 13 is a diagram for describing an operation example when a delivery mode 2 is applied to MBS multicast.
FIG. 14 is a diagram illustrating a configuration of an SIB 20 defined in the RRC specifications of 3GPP Release 17 (TS38. 331).
FIG. 15 is a diagram for describing an operation of a mobile communication system according to another embodiment.

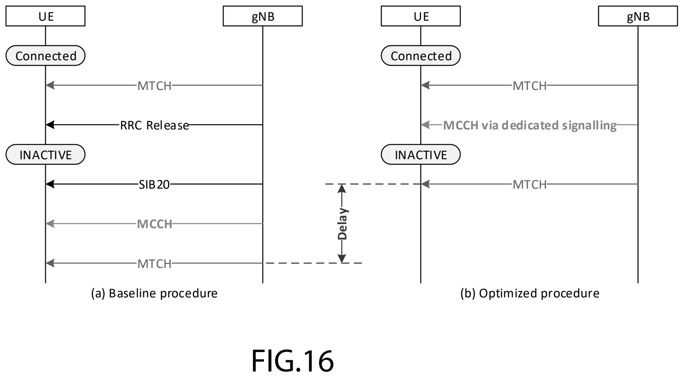

FIG. 16 is a diagram illustrating a PTM configuration delivery procedure for an activated multicast session.

### DESCRIPTION OF EMBODIMENTS

A mobile communication system according to an embodiment is described with reference to the drawings. In the description of the drawings, the same or similar parts are denoted by the same or similar reference signs.

### (1) First Embodiment

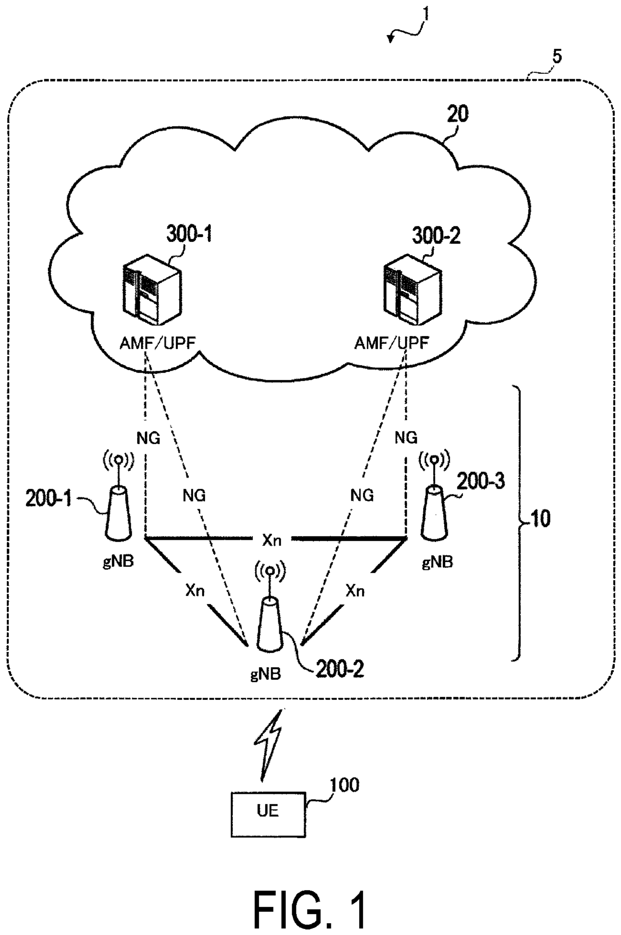

A first embodiment is described with reference to FIGs. 1 to 10.

### (1.1) System Configuration

FIG. 1 is a diagram illustrating a configuration of a mobile communication system 1 according to an embodiment. The mobile communication system 1 complies with the 5th Generation System (5GS) of the 3GPP standard. The description below takes the 5GS as an example, but Long Term Evolution (LTE) system may be at least partially applied to the mobile communication system. Alternatively, a sixth generation (6G) system may be at least partially applied to the mobile communication system.

The mobile communication system 1 includes User Equipment (UE) 100, a 5G radio access network (Next Generation Radio Access Network (NG-RAN)) 10, and a 5G Core Network (5GC) 20. Hereinafter, the NG-RAN 10 may be simply referred to as a RAN 10. The 5GC 20 may be simply referred to as a core network (CN) 20. The RAN 10 and the CN 20 constitute a network 5 of the mobile communication system 1.

The UE 100 is a mobile wireless communication apparatus. The UE 100 may be any apparatus as long as the UE 100 is used by a user. Examples of the UE 100 include a mobile phone terminal (including a smartphone) and/or a tablet terminal, a notebook PC, a communication module (including a communication card or a chipset), a sensor or an apparatus provided on a sensor, a vehicle or an apparatus provided on a vehicle (Vehicle UE), and a flying object or an apparatus provided on a flying object (Aerial UE).

The NG-RAN 10 includes base stations (referred to as "gNBs" in the 5G system) 200. The gNBs 200 are interconnected via an Xn interface which is an inter-base station interface. Each gNB 200 manages one or more cells. The gNB 200 performs wireless communication with the UE 100 that has established a connection to the cell of the gNB 200. The gNB 200 has a radio resource management (RRM) function, a function of routing user data (hereinafter simply referred to as "data"), a measurement control function for mobility control and scheduling, and the like. The "cell" is used as a term representing a minimum unit of a wireless communication area. The "cell" is also used as a term representing a function or a resource for performing wireless communication with the UE 100. One cell belongs to one carrier frequency (hereinafter, simply referred to as a "frequency").

Note that the gNB can be connected to an Evolved Packet Core (EPC) corresponding to a core network of LTE. An LTE base station can also be connected to the 5GC. The LTE base station and the gNB can be connected via an inter-base station interface.

The 5GC 20 includes an Access and Mobility Management Function (AMF) and a User Plane Function (UPF) 300. The AMF performs various types of mobility controls and the like for the UE 100. The AMF manages mobility of the UE 100 by communicating with the UE 100 by using Non-Access Stratum (NAS) signaling. The UPF controls data transfer. The AMF and UPF are connected to the gNB 200 via an NG interface which is an interface between a base station and the core network.

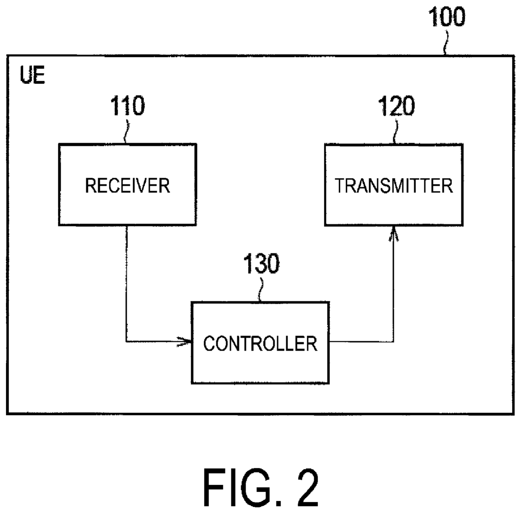

FIG. 2 is a diagram illustrating a configuration of the UE 100 (the user equipment) according to an embodiment. The UE 100 includes a receiver 110, a transmitter 120, and a controller 130. The receiver 110 and the transmitter 120 constitute a wireless communicator that performs wireless communication with the gNB 200.

The receiver 110 performs various types of reception under control of the controller 130. The receiver 110 includes an antenna and a reception device. The reception device converts a radio signal received through the antenna into a baseband signal (a reception signal) and outputs the resulting signal to the controller 130.

The transmitter 120 performs various types of transmission under control of the controller 130. The transmitter 120 includes an antenna and a transmission device. The transmission device converts a baseband signal (a transmission signal) output by the controller 130 into a radio signal and transmits the resulting signal through the antenna.

The controller 130 performs various types of control and processing in the UE 100. Such processing includes processing of respective layers to be described later. The operations of the UE 100 described above and below may be also performed under control of a controller 230. The controller 130 includes at least one processor and at least one memory. The memory stores a program to be executed by the processor and information to be used for processing by the processor. The processor may include a baseband processor and a Central Processing Unit (CPU). The baseband processor performs modulation and demodulation, coding and decoding, and the like of a baseband signal. The CPU executes the program stored in the memory to thereby perform various types of processing.

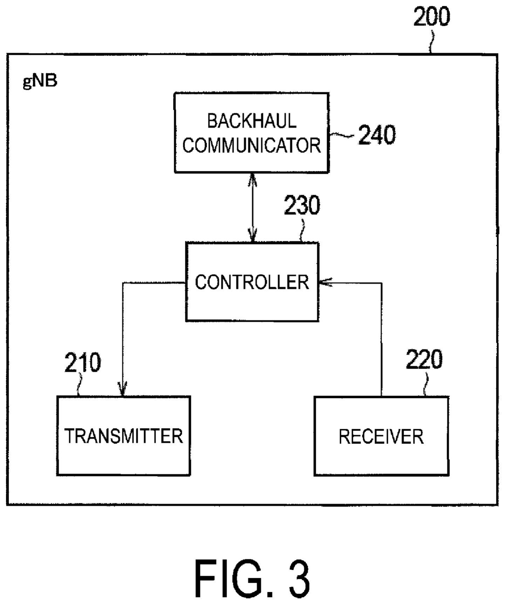

FIG. 3 is a diagram illustrating a configuration of the gNB 200 (the base station) according to an embodiment. The gNB 200 includes a transmitter 210, a receiver 220, a controller 230, and a backhaul communicator 240. The transmitter 210 and the receiver 220 constitute a wireless communicator that performs wireless communication with the UE 100. The backhaul communicator 240 constitutes a network communicator that performs communication with the CN 20.

The transmitter 210 performs various types of transmission under control of the controller 230. The transmitter 210 includes an antenna and a transmission device. The transmission device converts a baseband signal (a transmission signal) output by the controller 230 into a radio signal and transmits the resulting signal through the antenna.

The receiver 220 performs various types of reception under control of the controller 230. The receiver 220 includes an antenna and a reception device. The reception device converts a radio signal received through the antenna into a baseband signal (a reception signal) and outputs the resulting signal to the controller 230.

The controller 230 performs various types of control and processing in the gNB 200. Such processing includes processing of respective layers to be described later. The operations of the gNB 200 described above and below may be also performed under the control of the controller 230. The controller 230 includes at least one processor and at least one memory. The memory stores a program to be executed by the processor and information to be used for processing by the processor. The processor may include a baseband processor and a CPU. The baseband processor performs modulation and demodulation, coding and decoding, and the like of a baseband signal. The CPU executes the program stored in the memory to thereby perform various types of processing.

The backhaul communicator 240 is connected to a neighboring base station via an Xn interface which is an inter-base station interface. The backhaul communicator 240 is connected to the AMF/UPF 300 via an NG interface between a base station and the core network. Note that the gNB 200 may include a Central Unit (CU) and a Distributed Unit (DU) (i.e., functions are divided), and both units may be connected via an F1 interface that is a fronthaul interface.

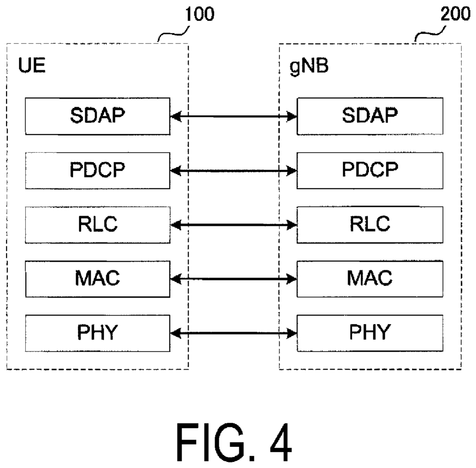

FIG. 4 is a diagram illustrating a configuration of a protocol stack of a radio interface of a user plane handling data.

A radio interface protocol of the user plane includes a PHYsical (PHY) layer, a Medium Access Control (MAC) layer, a Radio Link Control (RLC) layer, a Packet Data Convergence Protocol (PDCP) layer, and a Service Data Adaptation Protocol (SDAP) layer.

The PHY layer performs coding and decoding, modulation and demodulation, antenna mapping and demapping, and resource mapping and demapping. Data and control information are transmitted between the PHY layer of the UE 100 and the PHY layer of the gNB 200 via a physical channel. Note that the PHY layer of the UE 100 receives downlink control information (DCI) transmitted from the gNB 200 over a physical downlink control channel (PDCCH). Specifically, the UE 100 blind decodes the PDCCH using a radio network temporary identifier (RNTI) and acquires successfully decoded DCI as DCI addressed to the UE 100. The DCI transmitted from the gNB 200 is appended with CRC parity bits scrambled by the RNTI.

The MAC layer performs priority control of data, retransmission processing through hybrid ARQ (HARQ: Hybrid Automatic Repeat reQuest), a random access procedure, and the like. Data and control information are transmitted between the MAC layer of the UE 100 and the MAC layer of the gNB 200 via a transport channel. The MAC layer of the gNB 200 includes a scheduler. The scheduler decides transport formats (transport block sizes, Modulation and Coding Schemes (MCSs)) in the uplink and the downlink and resource blocks to be allocated to the UE 100.

The RLC layer transmits data to the RLC layer on the reception end by using functions of the MAC layer and the PHY layer. Data and control information are transmitted between the RLC layer of the UE 100 and the RLC layer of the gNB 200 via a logical channel.

The PDCP layer performs header compression/decompression, encryption/decryption, and the like.

The SDAP layer performs mapping between an IP flow as the unit of Quality of Service (QoS) control performed by a core network and a radio bearer as the unit of QoS control performed by an Access Stratum (AS). Note that, when the RAN is connected to the EPC, the SDAP need not be provided.

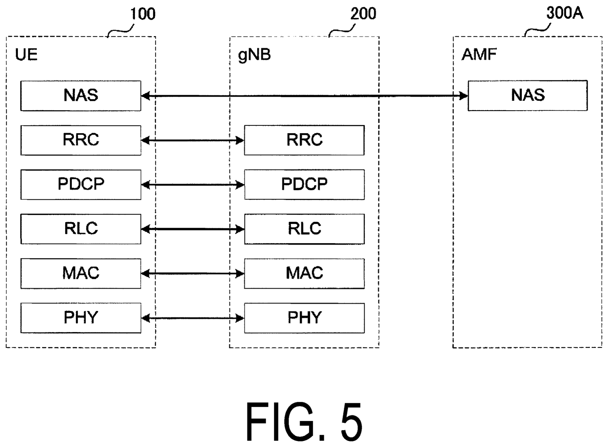

FIG. 5 is a diagram illustrating a configuration of a protocol stack of a radio interface of a control plane handling signaling (a control signal).

The protocol stack of the radio interface of the control plane includes a Radio Resource Control (RRC) layer and a Non-Access Stratum (NAS) layer instead of the SDAP layer illustrated in FIG. 4.

RRC signaling for various configurations is transmitted between the RRC layer of the UE 100 and the RRC layer of the gNB 200. The RRC layer controls a logical channel, a transport channel, and a physical channel according to establishment, re-establishment, and release of a radio bearer. When connection (RRC connection) is established between RRC of the UE 100 and RRC of the gNB 200, the UE 100 is in an RRC connected state. When connection (RRC connection) is not established between the RRC of the UE 100 and the RRC of the gNB 200, the UE 100 is in an RRC idle state. When the connection between the RRC of the UE 100 and the RRC of the gNB 200 is suspended, the UE 100 is in an RRC inactive state.

The NAS layer (also referred to simply as an "NAS") that is positioned upper than the RRC layer performs session management, mobility management, and the like. NAS signaling is transmitted between the NAS layer of the UE 100 and the NAS layer of an AMF 300A. Note that the UE 100 includes an application layer other than the protocol of the radio interface. Each layer lower than the NAS layer will be referred to as an AS layer (also referred to simply as an "AS").

### (1.2) MBS

The mobile communication system 1 can perform delivery with high resource efficiency by using the multicast/broadcast service (MBS). Note that a session refers to a sequence of communication (from start to end) of a service (an application), and an MBS session refers to a session used in the MBS.

In a case of a multicast communication service (also referred to as "MBS multicast"), the same service and the same specific content data are simultaneously provided to a specific UE set. That is, not every UE 100 in the multicast service area is permitted to receive data. The multicast communication services are delivered to the UE 100 using a multicast session that is a type of an MBS session. The UE 100 can receive the multicast communication services in the RRC connected state using mechanisms such as Point-to-Point (PTP) and/or Point-to-Multipoint (PTM) delivery. The UE 100 may receive the multicast communication services in the RRC inactive (or the RRC idle) state. Such a delivery mode will be also referred to as the "delivery mode 1". Note that the UE 100 can receive a multicast session only after joining the multicast session. Here, joining the multicast session may mean that the UE 100 is registered in the network 5 (the CN 20) as being capable of receiving the multicast session.

In a case of the broadcast communication services (also referred to as "MBS broadcast"), the same service and the same specific content data are provided simultaneously to every UE 100 in a geographic area. That is, every UE 100 in the broadcast service area is permitted to receive the data. The broadcast communication services are delivered to the UE 100 using a broadcast session that is a type of an MBS session. The UE 100 can receive the broadcast communication services in any state of the RRC idle state, the RRC inactive state, and the RRC connected state. Such a delivery mode will be also referred to as "delivery mode 2".

Main logical channels used for MBS delivery are a Multicast Traffic CHannel (MTCH), a Dedicated Traffic CHannel (DTCH), and a Multicast Control CHannel (MCCH). The MTCH is a PTM downlink channel for transmitting MBS data of a multicast session and/or a broadcast session from the network 10 to the UE 100. The DTCH is a PTP channel for transmitting MBS data of a multicast session from the network 10 to the UE 100. The MCCH is a PTM downlink channel for transmitting MBS broadcast control information associated with one or more MTCHs from the network 10 to the UE 100. In the delivery mode 1, various configurations for the UE 100 are performed using a dedicated control channel (DCCH).

For transmission of MBS data packets (also referred to as "MBS packets"), in the MBS multicast, any of point-to-point (PTP) transmission corresponding to unicast and point-to-multipoint (PTM) transmission can be applied. On the other hand, in the MBS broadcast, only the PTM transmission can be applied. For the PTP transmission, the gNB 200 can deliver a separate copy of an MBS packet to each UE 100 independently. For example, the gNB 200 uses a UE-specific PDCCH with a cyclic redundancy code (CRC) scrambled by a UE-specific RNTI (e.g., the C-RNTI) to schedule a UE-specific PDSCH scrambled by a UE-specific RNTI. On the other hand, for the PTM transmission, the gNB 200 delivers a single copy of an MBS packet to a set (group) of a plurality of UEs 100. For example, the gNB 200 uses a group-common PDCCH with a CRC scrambled by a group-common RNTI (e.g., the G-RNTI) to schedule a group-common PDSCH scrambled by a group-common RNTI.

Regarding a configuration for MBS broadcast, the UE 100 in the RRC idle state, the RRC inactive state, or the RRC connected state receives a PTM configuration for a broadcast session (e.g., parameters necessary for MTCH reception) via the MCCH. Parameters necessary for reception of the MCCH (MCCH configuration) are provided through system information. More specifically, system information block/type 20 (the SIB 20) includes the MCCH configuration. Note an SIB type 21 (the SIB 21) includes information relating to service continuity of MBS broadcast reception. The MCCH provides a list of all broadcast services including ongoing sessions transmitted on the MTCH, and the related information of the broadcast session includes an MBS session identifier (e.g., Temporary Mobile Group Identity (TMGI)), related MTCH scheduling information, and information relating to neighboring cells providing a specific service on the MTCH.

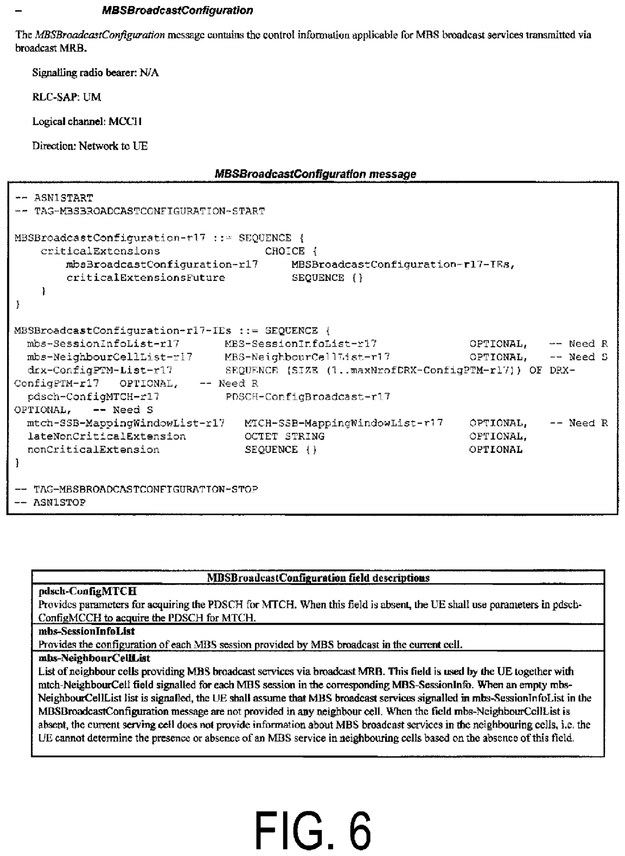

FIG. 6 is a diagram illustrating an MBS broadcast configuration (MBSBroadcastConfiguration) message in an MCCH defined in the RRC Technical Specifications (TS38. 331). The MCCH includes an MBS session information list (mbs-SessionInfoList) providing a configuration of each MBS session (each broadcast session) provided in MBS broadcast in the current cell, a list of neighbor cells (mbs-NeighbourCellList) providing an MBS broadcast service via a broadcast MRB, a list of DRX configurations (drx-ConfigPTM-List), and a parameter (pdsch-ConfigMTCH) for acquiring a PDSCH for the MTCH.

On the other hand, as for MBS multicast, the current technical specifications of the 3GPP enable the UE 100 to receive data of multicast sessions only in the RRC connected state. When the UE 100 having joined a multicast session is in the RRC connected state and the multicast session is activated, the gNB 200 transmits an RRC reconfiguration message including a PTM configuration relating to the multicast session to the UE 100. Such a PTM configuration is also referred to as a multicast radio bearer (MRB) configuration, an MTCH configuration, or a PTM configuration. Such an MRB configuration (MRB-ToAddMod) includes an MBS session identifier (mbs-SessionId), an MRB identifier (mrb-Identity), and other parameters such as a PDCP configuration (pdcp-Config) for an MRB (multicast MRB) to be configured for the UE 100.

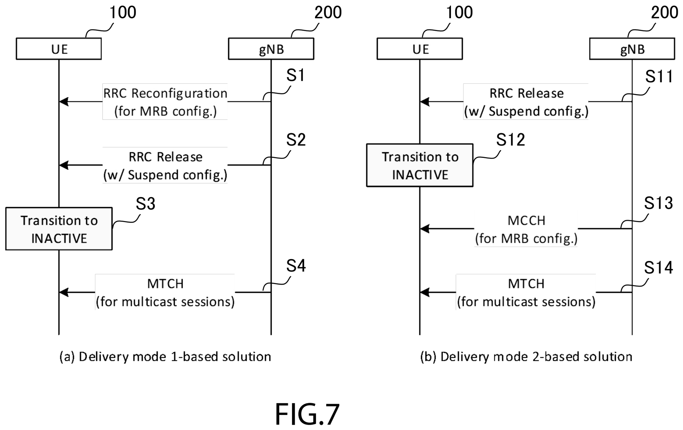

In the following embodiment, an operation of enabling the UE 100 in the RRC inactive state to perform multicast reception will be mainly described. FIG. 7 is a diagram illustrating an overview of the operation.

As a solution for the UE 100 in the RRC inactive state to perform multicast reception, a solution based on the delivery mode 1 illustrated in FIG. 7(a) and a solution based on the delivery mode 2 illustrated in FIG. 7(b) are considered. Assume that the UE 100 supports multicast reception in the RRC inactive state and has joined a multicast session.

In the solution based on the delivery mode 1 illustrated in FIG. 7(a), in step S1, the gNB 200 transmits an RRC Reconfiguration message including the MBS configuration (PTM configuration) for multicast sessions to the UE 100 in the RRC connected state. The UE 100 receives multicast data on the MTCH via the multicast session (multicast MRB) based on the PTM configuration received in the RRC Reconfiguration message.

In step S2, the gNB 200 transmits to the UE 100 in the RRC connected state an RRC release (Release) message for causing the UE 100 to transition to the RRC inactive state. The RRC Release message includes a configuration (Suspend Config.) for the RRC inactive state.

In step S3, the UE 100 transitions from the RRC connected state to the RRC inactive (INACTIVE) state in response to reception of the RRC Release message in step S2.

In step S4, the UE 100 in the RRC inactive state continues to use the PTM configuration in step S1 to receive the multicast data on the MTCH over the multicast session.

This enables the UE 100 in the RRC inactive state to perform multicast reception. Note that, although an example where the PTM configuration is performed using the RRC Reconfiguration message has been described, the PTM configuration may be performed using an RRC Release message.

Both the RRC Reconfiguration message and the RRC Release message are RRC messages transmitted per UE on the dedicated control channel (DCCH), and are hereinafter also referred to as dedicated RRC messages or dedicated signaling.

On the other hand, in the solution based on the delivery mode 2 illustrated in FIG. 7(b), in step S11, the gNB 200 transmits to the UE 100 in the RRC connected state an RRC Release message for causing the UE 100 to transition to the RRC inactive state. The RRC Release message includes a configuration (Suspend Config.) for the RRC inactive state.

In step S12, the UE 100 transitions to the RRC inactive (INACTIVE) state in response to reception of the RRC Release message in step S11.

In step S13, the gNB 200 transmits the MCCH including the MBS configuration (PTM configuration) for the multicast session. The UE 100 receives the MCCH. Note that the UE 100 receives the SIB 20 prior to the reception of the MCCH, and receives the MCCH based on the SIB 20. Note that the MCCH transmission (and reception) may be performed before step S11 or may be performed simultaneously with step S11.

In step S14, the UE 100 in the RRC inactive state receives the multicast data on the MTCH over the multicast session based on the PTM configuration received on the MCCH in step S13. This enables the UE 100 in the RRC inactive state to perform multicast reception.

A mix solution of the solution based on the delivery mode 1 and the solution based on the delivery mode 2 is also contemplated. For example, a mix configuration method is also possible in which an initial configuration of the MBS configuration (PTM configuration) is performed through dedicated signaling and the update of the MBS configuration (PTM configuration) is performed on the MCCH.

### (1.3) Operation According to First Embodiment

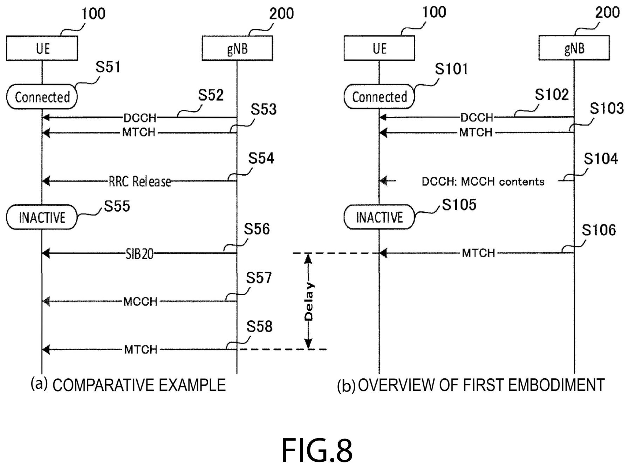

FIG. 8 is a diagram for describing an overview of operations according to a first embodiment. FIG. 8(a) illustrates an example of a mix configuration method, a comparative example, for mixing the solution based on the delivery mode 1 and the solution based on the delivery mode 2. FIG. 8(b) illustrates the overview of the operations according to the first embodiment.

As illustrated in FIG. 8(a), in step S51, the UE 100 is in the RRC connected state. Assume that the UE 100 supports multicast reception in the RRC inactive state and has joined a multicast session.

In step S52, the gNB 200 transmits to the UE 100 in the RRC connected state an RRC Reconfiguration message including an MBS configuration (PTM configuration) for the multicast session on the DCCH. The UE 100 receives the RRC Reconfiguration message and establishes a multicast MRB. At this time, the multicast session becomes in an activated state.

In step S53, the gNB 200 transmits a multicast session on the MTCH. The UE 100 receives the multicast session on the MTCH via the multicast MRB based on the PTM configuration received in the RRC Reconfiguration message in step S52.

In step S54, the gNB 200 transmits to the UE 100 in the RRC connected state an RRC Release message for causing the UE 100 to transition to the RRC inactive state.

In step S55, the UE 100 transitions to the RRC inactive (INACTIVE) state in response to reception of the RRC Release message in step S54.

In step S56, the gNB 200 transmits the SIB 20 including the MCCH configuration on a BCCH. The UE 100 in the RRC inactive state receives the SIB 20.

In step S57, the gNB 200 transmits a PTM configuration (e.g., MBSBroadcastConfiguration message) for a multicast session on the MCCH. The UE 100 in the RRC inactive state receives the PTM configuration on the MCCH based on the SIB 20 in step S56. The UE 100 establishes a new MRB in accordance with the PTM configuration. The new MRB may be a broadcast MRB.

In step S58, the gNB 200 transmits a multicast session via the new MRB on the MTCH. The UE 100 in the RRC inactive state receives the multicast session on the MTCH.

As described above, in the comparative example illustrated in FIG. 8(a), since the UE 100 transitions to the RRC inactive state (step S55), and thereafter, acquires the SIB 20 (step S56) and acquires the MCCH (step S57), there is a problem that service interruption may occur due to the acquiring of the SIB 20 and the acquiring of the MCCH.

In the first embodiment, as illustrated in FIG. 8(b), the gNB 200 transmits to the UE 100 that is in the RRC connected state and has joined the multicast session the PTM configuration for that multicast session on the DCCH (step S104). Here, the gNB 200 transmits, on the DCCH, the PTM configuration including an information element that is the same as an information element provided on the MCCH when the multicast session is activated. The UE 100 in the RRC connected state and having joined the multicast session receives the PTM configuration on the DCCH (step S104). This allows the UE 100 to transition to the RRC inactive state (step S106) and then immediately receive the multicast session on the MTCH (step S105).

To be more specific, as illustrated in FIG. 8(b), in step S101, the UE 100 is in the RRC connected state. Assume that the UE 100 supports multicast reception in the RRC inactive state and has joined a multicast session.

In step S102, the gNB 200 transmits to the UE 100 in the RRC connected state an RRC Reconfiguration message including an MBS configuration (PTM configuration) for the multicast session on the DCCH. The UE 100 receives the RRC Reconfiguration message and establishes a multicast MRB (first MRB). At this time, the multicast session becomes in an activated state.

In step S103, the gNB 200 transmits a multicast session on the MTCH. The UE 100 receives the multicast session on the MTCH via the multicast MRB based on the PTM configuration received in the RRC Reconfiguration message in step S102.

In step S104, the gNB 200 transmits on the DCCH (that is dedicated signaling) a PTM configuration that is the same as and/or similar to the PTM configuration (e.g., MBSBroadcastConfiguration message) transmitted on the MCCH to the UE 100 in the RRC connected state. For example, the gNB 200 transmits an RRC reconfiguration (RRC Reconfiguration) message including the PTM configuration or an RRC release (RRC Release) message including the PTM configuration. The UE 100 in the RRC connected state receives the PTM configuration on the DCCH. The UE 100 recognizes that the received PTM configuration is configuration information for multicast reception. The UE 100 establishes a new MRB (second MRB) in accordance with the PTM configuration. The new MRB may be a broadcast MRB.

In step S105, the UE 100 transitions to the RRC inactive (INACTIVE) state. When step S104 is performed through the RRC Reconfiguration message, the gNB 200 transmits an RRC Release message for causing the UE 100 to transition to the RRC inactive state. The UE 100 transitions to the RRC inactive state in response to reception of the RRC Release message.

In step S106, the gNB 200 transmits a multicast session on the MTCH via the new MRB (second MRB). The UE 100 in the RRC inactive state receives the multicast session on the MTCH.

Note that the UE 100 may perform predetermined processing of switching from the first MRB to the second MRB depending on a result of comparison between a sequence number of an MBS packet received via the first MRB for the RRC connected state and a sequence number of an MBS packet received via the second MRB for the RRC inactive state. This makes it easy to match the received packets between the first MRB and the second MRB.

In a first operation pattern according to the first embodiment, step S104 is performed through the RRC Reconfiguration message. In this case, the predetermined processing may be processing of transmitting a notification for the switching (e.g., a matching notification) to the gNB 200. In a second operation pattern according to the first embodiment, step S104 is performed through the RRC Release message. In this case, the predetermined processing may be processing of transition from the RRC connected state to the RRC inactive state.

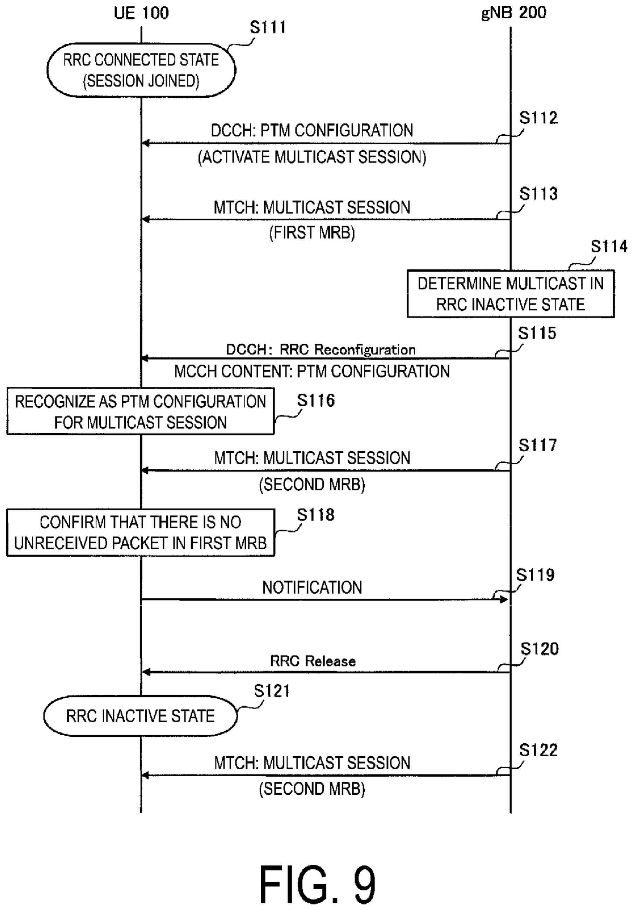

FIG. 9 is a diagram illustrating an example of the first operation pattern according to the first embodiment. Here, the description of a duplicated operation of the operation illustrated in FIG. 8(b) is omitted.

In step S111, the UE 100 in the RRC connected state has joined a multicast session.

In step S112, the gNB 200 transmits a multicast MRB configuration (PTM configuration) to the UE 100 in an RRC Reconfiguration message. The UE 100 receives the PTM configuration and establishes a multicast MRB (first MRB). The multicast session becomes in an activated state.

In step S113, the UE 100 in the RRC connected state receives a multicast session on the MTCH via the first MRB from the gNB 200.

In step S114, the gNB 200 determines to cause the UE 100 in the RRC inactive state to perform multicast reception.

In step S115, the gNB 200 transmits a PTM configuration for the multicast session (configuration information such as scheduling of the MTCH) to the UE 100 via the DCCH. In this operation pattern, the message transmitted on the DCCH in step S115 is an RRC Reconfiguration message. The UE 100 receives the PTM configuration and establishes a second MRB. The second MRB may be 1) a multicast MRB, 2) a broadcast MRB for multicast, or 3) a new type of MRB for multicast reception in the RRC inactive state. The UE 100 associates the originally configured multicast MRB (first MRB) with the newly configured MRB (second MRB) for the RRC inactive state.

Here, the PTM configuration in step S115 may be the same PTM configuration as the MBS broadcast configuration provided on the MCCH. The PTM configuration in step S115 may be new information that is used for the multicast reception in the RRC inactive state and include an information element the same as the MBS broadcast configuration provided on the MCCH.

The PTM configuration in step S115 may include only the PTM configuration for the multicast session that the UE 100 is receiving. That is, the PTM configuration in step S115 may include only the PTM configuration for the activated multicast session. Alternatively, the PTM configuration in step S115 may include only the PTM configuration for the MBS session that has configured the multicast MRB for the UE 100. The PTM configuration in step S115 may include no PTM configuration for the broadcast session. Alternatively, the PTM configuration in step S115 may include only the PTM configuration for the multicast session in which the UE 100 has joined. That is, the PTM configuration in step S115 may include only the PTM configuration for the multicast session that can be activated.

In step S116, the UE 100 recognizes that the PTM configuration received from the gNB 200 on the DCCH is for a multicast session. Here, the UE 100 may perform the recognition when receiving the PTM configuration not including the MRB configuration (MRB-ToAddMod). Alternatively, the UE 100 may perform the recognition when receiving the PTM configuration not including the MRB identifier (MRB-Identity). The UE 100 may recognize that the PTM configuration is a configuration used for the reception in the RRC inactive state. However, the UE 100 may perform multicast reception using the configuration while remaining in the RRC connected state.

In step S117, the UE 100 in the RRC connected state receives a multicast session on the MTCH via the second MRB from the gNB 200 based on the PTM configuration in step S115.

In step S118, the UE 100 in the RRC connected state compares a sequence number (SN) of a received packet in the first MRB with an SN of a received packet in the second MRB. For example, the UE 100 compares a PDCP SN of a received PDCP packet in the first MRB with a PDCP SN of a received PDCP packet in the second MRB. The UE 100 may determine that there is no unreceived packet when there is no missing between the SN of the packet received last in the first MRB and the SN of the packet received first in the second MRB. Alternatively, the UE 100 may determine that there is no unreceived packet when a difference between the SN of the packet received last in the first MRB and the SN of the packet received first in the second MRB is equal to or less than a threshold. The threshold may be configured from the gNB 200 for the UE 100.

In step S119, the UE 100 in the RRC connected state transmits, to the gNB 200, a notification indicating that switching from the first MRB to the second MRB is possible or that the switching has been completed. The UE 100 may include the notification in a response message (e.g., an RRC Reconfiguration Complete message) corresponding to the RRC Reconfiguration message in step S115 and transmit the response message to the gNB 200. Alternatively, the UE 100 may transmit the notification in a UE Assistance Information message. For example, the UE 100 may transmit the notification as a part of Release Assistance Information (to be more specific, a "ReleasePreference" IE) which is an information element included in the UE Assistance Information message.

In step S120, the gNB 200 transmits to the UE 100 an RRC release (Release) message for causing the UE 100 to transition to the RRC inactive state based on the notification in step S119.

In step S121, the UE 100 transitions to the RRC inactive state in response to reception of the RRC Release message.

In step S122, the UE 100 in the RRC connected state receives a multicast session on the MTCH via the second MRB from the gNB 200 based on the PTM configuration in step S115.

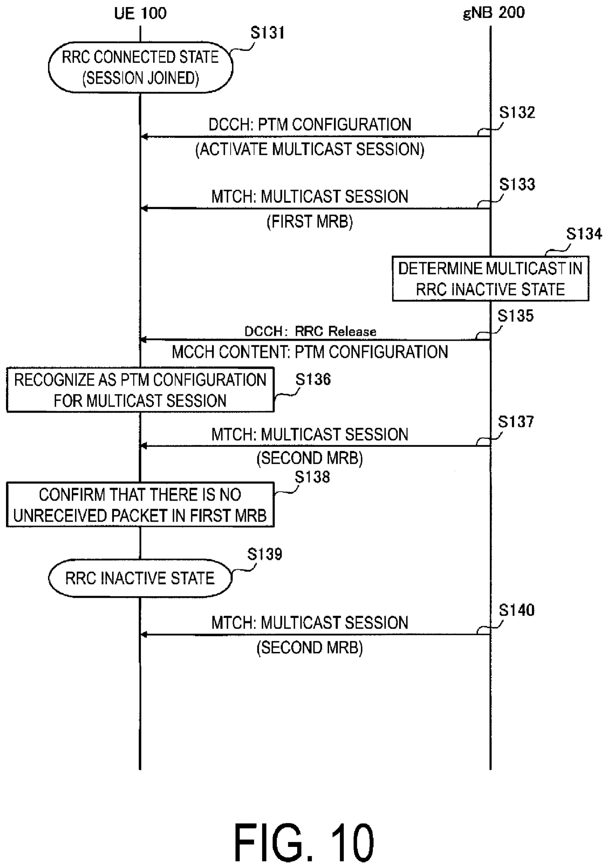

FIG. 10 is a diagram illustrating an example of the second operation pattern according to the first embodiment. Here, the description of a duplicated operation of the first operation pattern illustrated in FIG. 9 is omitted.

The operations in steps S 131 to S 134 are the same as and/or similar to the operations in steps S111 to S114 of FIG. 9.

In step S135, the gNB 200 transmits a PTM configuration for the multicast session (configuration information such as scheduling of the MTCH) to the UE 100 via the DCCH. In this operation pattern, the message transmitted on the DCCH in step S135 is an RRC Release message. The UE 100 receives the PTM configuration and establishes a second MRB. The second MRB may be 1) a multicast MRB, 2) a broadcast MRB for multicast, or 3) a new type of MRB for multicast reception in the RRC inactive state. The UE 100 associates the originally configured multicast MRB (first MRB) with the newly configured MRB (second MRB) for the RRC inactive state.

Here, the PTM configuration in step S135 may be the same PTM configuration as the MBS broadcast configuration provided on the MCCH. The PTM configuration in step S135 may be new information that is used for the multicast reception in the RRC inactive state and include an information element the same as the MBS broadcast configuration provided on the MCCH.

The PTM configuration in step S135 may include only the PTM configuration for the multicast session that the UE 100 is receiving. That is, the PTM configuration in step S135 may include only the PTM configuration for the activated multicast session. Alternatively, the PTM configuration in step S135 may include only the PTM configuration for the MBS session that has configured the multicast MRB for the UE 100. The PTM configuration in step S135 may include no PTM configuration for the broadcast session.

In step S136, the UE 100 recognizes that the PTM configuration received from the gNB 200 on the DCCH is for a multicast session. The UE 100 may recognize that the PTM configuration is a configuration used for the reception in the RRC inactive state. However, the UE 100 may perform multicast reception using the configuration while remaining in the RRC connected state.

In step S137, the UE 100 in the RRC connected state receives a multicast session on the MTCH via the second MRB from the gNB 200 based on the PTM configuration in step S135. At this time, the UE 100 having received the RRC Release message suspends transition to the RRC inactive state.

In step S138, the UE 100 in the RRC connected state compares a sequence number (SN) of a received packet in the first MRB with an SN of a received packet in the second MRB. For example, the UE 100 compares a PDCP SN of a received PDCP packet in the first MRB with a PDCP SN of a received PDCP packet in the second MRB. The UE 100 may determine that there is no unreceived packet when there is no missing between the SN of the packet received last in the first MRB and the SN of the packet received first in the second MRB. Alternatively, the UE 100 may determine that there is no unreceived packet when a difference between the SN of the packet received last in the first MRB and the SN of the packet received first in the second MRB is equal to or less than a threshold. The threshold may be configured from the gNB 200 for the UE 100.

In step S 139, the UE 100 in the RRC connected state transitions to the RRC inactive state.

In step S140, the UE 100 in the RRC connected state receives a multicast session on the MTCH via the second MRB from the gNB 200 based on the PTM configuration in step S135.

### (2) Second Embodiment

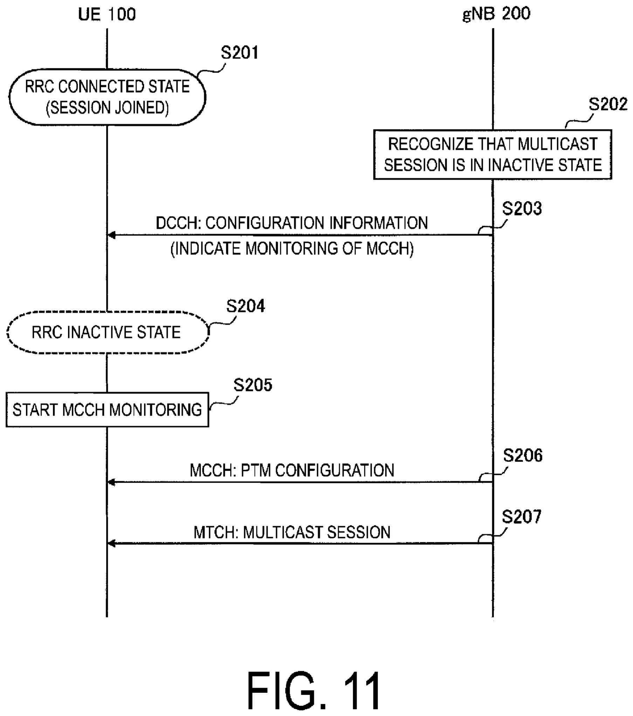

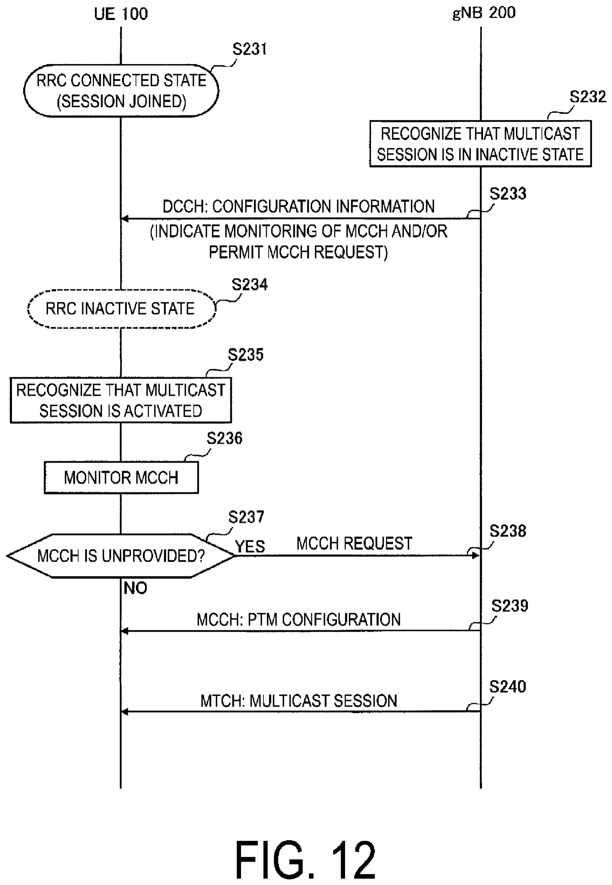

A second embodiment is described with reference to FIGs. 11 and 12, focusing on differences from the first embodiment. Note that the second embodiment may be implemented in combination with the first embodiment.

In the example described above according to the first embodiment, the PTM configuration used in the RRC inactive state is provided from the gNB 200 to the UE 100 on the DCCH (through dedicated signaling) in a situation in which the multicast session is activated.

In contrast, in the second embodiment, the configuration information relating to the RRC inactive state is provided from the gNB 200 to the UE 100 on the DCCH (through dedicated signaling) in a situation in which the multicast session is not yet activated. To be more specific, for a multicast session in the inactive state (before activation), the gNB 200 configures, through dedicated signaling, information relating to permission for multicast reception in the RRC inactive state for the UE 100 in the RRC connected state.

In the second embodiment, the UE 100 that is in the RRC connected state and has joined a multicast session receives configuration information from the gNB 200 on the DCCH. Here, the UE 100 receives the configuration information relating to the permission for multicast reception in the RRC inactive state when the multicast session is not yet activated from the gNB 200 on the DCCH.

This enables multicast reception to be facilitated in the RRC inactive state.

In a first operation pattern according to the second embodiment, the configuration information includes an information element indicating monitoring of the MCCH (acquiring the PTM configuration from the MCCH). The information element may be an information element indicating monitoring of the MCCH after transition to the RRC inactive state. The UE 100 monitors the MCCH based on the information element.

In a second operation pattern according to the second embodiment, the configuration information may include an information element that permits requesting the MCCH when the serving cell does not transmit the MCCH. The information element may be an information element that permits requesting the MCCH in when the current serving cell does not transmit the MCCH when the multicast session is activated after the transition to the RRC inactive state. The UE 100, upon detecting that the multicast session is activated, requests the gNB 200 to provide the MCCH when the MCCH is not provided from the gNB 200 at the time of the detecting.

In the second embodiment, the configuration information may include an information element prohibiting the UE 100 from transitioning to the RRC connected state in response to reception of a paging message indicating that the multicast session is activated. Even when the UE 100 receives the paging message indicating that the multicast session is activated from the gNB 200, the UE 100 maintains the RRC inactive state without transitioning to the RRC connected state.

FIG. 11 is a diagram illustrating an example of the first operation pattern according to the second embodiment.

In step S201, the UE 100 in the RRC connected state has joined a multicast session.

In step S202, the gNB 200 recognizes that the multicast session is not yet activated (i.e., is in the inactive state). Note that the gNB 200 can recognize whether the multicast session is activated based on a message (e.g., a "MULTICAST SESSION ACTIVATION REQUEST" message) received from the CN 20 (AMF 300A) on the NG interface.

In step S203, the gNB 200 transmits, to the UE 100 in the RRC connected state, the configuration information relating to the multicast reception in the RRC inactive state on the DCCH (i.e., through dedicated signaling). The UE 100 receives the configuration information on the DCCH. That dedicated signaling may be an RRC Reconfiguration message or an RRC Release message.

The configuration information in step S203 may include an information element indicating to the UE 100 that the UE 100 monitors the MCCH (even in the RRC connected state). Alternatively, the configuration information in step S203 may include an information element indicating that the UE 100 monitors the MCCH when the UE 100 transitions to the RRC inactive state. The configuration information in step S203 may include an MBS session ID (e.g., TMGI) of a multicast session for which the PTM configuration is to be obtained from the MCCH. Note that when the UE 100 (in the RRC connected state) successfully receives the MCCH (or successfully establishes an MRB), the UE 100 may transmit a notification to the gNB 200. The UE 100 may transmit the notification in a UE Assistance Information message. For example, the UE 100 may transmit the notification as a part of Release Assistance Information (to be more specific, a "ReleasePreference" IE) which is an information element included in the UE Assistance Information message. Alternatively, the UE 100 may transmit a notification to the gNB 200 when failing to receive the MCCH.

The configuration information in step S203 may include an information element indicating that the UE 100 in the RRC inactive state does not monitor group paging (i.e., a paging message including the MBS session ID of the multicast session to be activated), or ignores the MBS session ID in the paging message. As described above, causing the UE 100 to ignore the group paging prevents the UE 100 from transitioning to the RRC connected state in response to reception of the group paging, and facilitates the UE 100 in the RRC inactive state continuing the multicast reception. To be more specific, even when an MBS session in which the UE 100 is interested is activated and a paging message including an MBS session ID of the MBS session is transmitted from the gNB 200, the UE 100 can be controlled not to transition to the RRC connected state.

In step S204, the UE 100 may transition to the RRC inactive state. When step S203 is performed through the RRC Reconfiguration message, the gNB 200 may transmit an RRC Release message for causing the UE 100 to transition to the RRC inactive state. The UE 100 may transition to the RRC inactive state in response to reception of the RRC Release message.

In step S205, the UE 100 in the RRC inactive state or the RRC connected state starts monitoring the MCCH based on the configuration information in step S203.

In step S206, the gNB 200 transmits (broadcasts) the PTM configuration for the multicast session on the MCCH. The gNB 200 may recognize that the multicast session is activated and transmit (broadcast) the PTM configuration for the activated multicast session on the MCCH. The UE 100 receives the PTM configuration on the MCCH.

In step S207, the gNB 200 transmits (multicasts) the multicast session on the MTCH. The UE 100 receives the multicast session on the MTCH based on the PTM configuration in step S206.

FIG. 12 is a diagram illustrating an example of the second operation pattern according to the second embodiment. Here, the description of a duplicated operation of the first operation pattern illustrated in FIG. 11 is omitted. Note that the second operation pattern may be performed in combination with the first operation pattern illustrated in FIG. 11.

In step S231, the UE 100 is in the RRC connected states and has joined a multicast session.

In step S232, the gNB 200 recognizes that the multicast session is not yet activated (i.e., is in the inactive state).

In step S233, the gNB 200 transmits, to the UE 100 in the RRC connected state, the configuration information relating to the multicast reception in the RRC inactive state on the DCCH. The UE 100 receives the configuration information on the DCCH. The configuration information may include an information element indicating acquiring the PTM configuration from the MCCH. The configuration information may include an information element permitting the UE 100 to request the MCCH.

In step S234, the gNB 200 may cause the UE 100 to transition to the RRC inactive state through the RRC Release message. The UE 100 having transitioned to the RRC inactive state may reselect a cell different from the cell for which the configuration in step S233 has been performed.

In step S235, the UE 100 in the RRC inactive state or the RRC connected state recognizes an activation timing which is a timing at which the multicast session is started (activated). The activation timing may be a timing at which the UE 100 receives the group paging including the MBS session ID of the multicast session from the gNB 200. The activation timing may be a timing at which the UE 100 receives MCCH Change Notification from the gNB 200 and the PTM configuration for the multicast session is added. The activation timing may be a timing of a start time of the multicast session, from user service description (USD) information held in advance by the UE 100.

In step S236, the UE 100 in the RRC inactive state or the RRC connected state starts monitoring the MCCH in response to recognizing the activation timing.

Here, when the MCCH is not broadcast from the gNB 200 (the current serving cell) (step S237: YES), the UE 100 in the RRC inactive state or the RRC connected state transmits an MCCH request to the gNB 200 in step S238. The UE 100 may transmit the MCCH request in Msg1, Msg3, or Msg5 in the random access procedure. The UE 100 may transmit the MCCH request in an MBS Interest Indication message or the UE Assistance Information message.

In step S239, the gNB 200 transmits the PTM configuration for the multicast session on the MCCH. Here, the gNB 200 may start broadcasting the MCCH. Alternatively, the gNB 200 may transmit MCCH content (PTM configuration) in an RRC Reconfiguration message to the UE 100 in the RRC connected state. Alternatively, the gNB 200 may transmit the MCCH content (PTM configuration) in an RRC Release message to the UE 100. For example, the UE 100 may request the MCCH content (PTM configuration) from the gNB 200 in Msg3 (RRC Resume message) in the random access procedure, and the gNB 200 may transmit the MCCH content (PTM configuration) in the RRC Release message to the UE 100 in response to Msg3.

In step S240, the gNB 200 transmits (multicasts) the multicast session on the MTCH. The UE 100 receives the multicast session on the MTCH based on the PTM configuration in step S239.

### (3) Another Embodiment

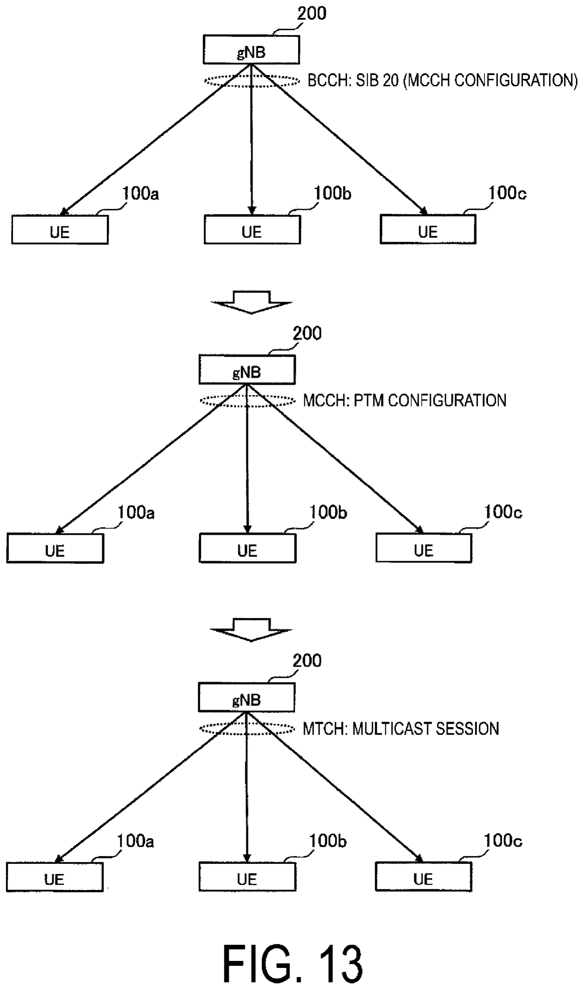

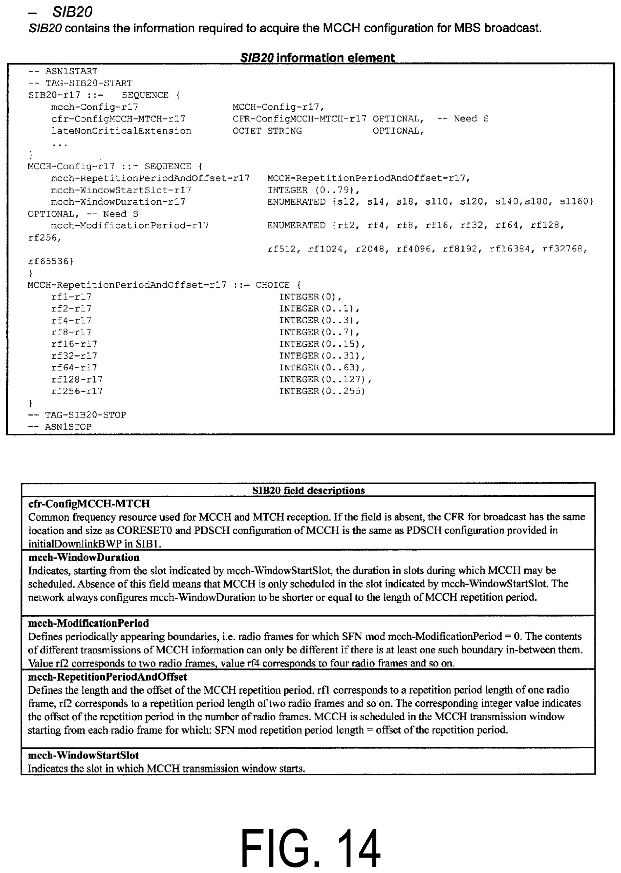

In the example described in the above-described embodiments, the gNB 200 broadcasts the SIB 20 and the MCCH in the delivery mode 2. FIG. 13 is a diagram for describing an operation example when the delivery mode 2 is applied to MBS multicast. When the delivery mode 2 is applied to the MBS multicast, the following procedure is considered. To be more specific, first, the gNB 200 transmits, to the UE 100 (the UEs 100a to 100c in the illustrated example), the SIB 20 including the MCCH configuration (to be more specific, scheduling information of the MCCH and the like) on a broadcast control channel (BCCH). FIG. 14 illustrates a configuration of the SIB 20 defined in the RRC specifications of 3GPP Release 17 (TS38. 331). The SIB 20 includes mcch-Config-r17, which is an MCCH configuration. Second, the gNB 200 transmits the PTM configuration (MTCH configuration) to the UE 100 on the MCCH. Third, the gNB 200 transmit a multicast session (to be more specific, multicast PTM data) to the UE 100 on the MTCH.

Here, since the SIB 20 transmission and the MCCH transmission are performed in broadcast, all the UEs 100 in the cell in which the SIB 20 and the MCCH are transmitted can receive the multicast session. However, the MBS multicast should only be received by a specific set of UEs joining the multicast session. Therefore, there is a concern about security that the PTM configuration in multicast (that is, the MCCH) can be acquired by all the UEs 100. In the other embodiment, an operation (communication method) capable of performing appropriate multicast delivery using the MCCH is described.

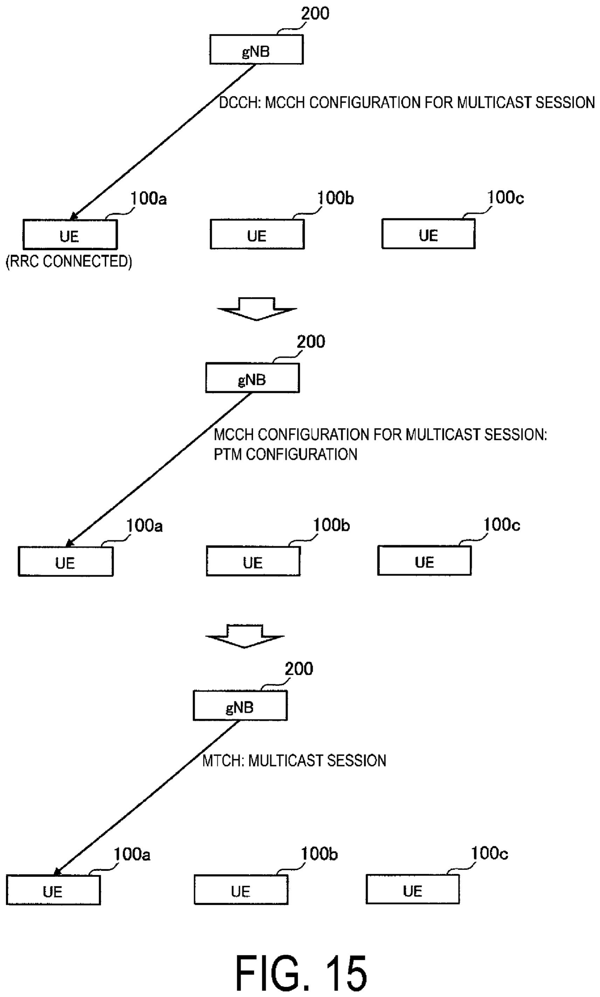

FIG. 15 is a diagram for describing an operation (communication method) of a mobile communication system 1 according to the other embodiment.

In the communication method according to the other embodiment, first, the gNB 200 transmits, to the UE 100 (the UE 100a in the illustrated example) in the RRC connected state, scheduling information of an MCCH (MCCH configuration) for transmitting a PTM configuration for a multicast session through dedicated signaling (e.g., on the DCCH). The UE 100 receives the MCCH scheduling information (MCCH configuration). Here, the MCCH scheduling information (MCCH configuration) is scheduling information of the MCCH for a multicast session for transmitting the PTM configuration for the multicast session. The MCCH for a multicast session is an MCCH different from the MCCH for a broadcast session for transmitting the PTM configuration for the broadcast session.

Second, the gNB 200 transmits the MCCH for a multicast session. The gNB 200 may transmit the MCCH for a multicast session in scheduling (e.g., time/frequency resources) different from that of the MCCH for a broadcast session. The UE 100 (the UE 100a in the illustrated example) receives the MCCH for a multicast session. At this time, the UE 100 may be in the RRC connected state, the RRC inactive state, or the RRC idle state.

Third, the gNB 200 transmits a multicast session (multicast MBS data) on the MTCH. The UE 100 (the UE 100a in the illustrated example) receives the multicast session. At this time, the UE 100 may be in the RRC connected state, the RRC inactive state, or the RRC idle state.

As described above, in the other embodiment, the MCCH configuration for the MCCH for a multicast session is provided to the UE 100 through dedicated signaling. Accordingly, the MCCH configuration for a multicast session may be provided only to a specific UE 100 (or a specific set of UEs 100). Therefore, even when the MCCH is used, only a specific UE 100 (or a specific set of UEs 100) joining a multicast session can easily receive the multicast session.

Although the multicast reception in the RRC inactive state has been mainly described in the above-described embodiments, the operations according to the above-described embodiments may also be applied to multicast reception in the RRC idle state. With respect to the RRC idle state, the above-described RRC resume (Resume) can be read as RRC establishment (Establishment).

The operation flows described above can be separately and independently implemented, and also be implemented in combination of two or more of the operation flows. For example, some steps of one operation flow may be added to another operation flow or some steps of one operation flow may be replaced with some steps of another operation flow. In each flow, all steps may not be necessarily performed, and only some of the steps may be performed.

Although the example in which the base station is an NR base station (gNB) has been described in the embodiments and examples described above, the base station may be an LTE base station (eNB) or a 6G base station. The base station may be a relay node such as an Integrated Access and Backhaul (IAB) node. The base station may be a DU of the IAB node. The UE 100 may be a Mobile Termination (MT) of the IAB node.

The term "network node" mainly means a base station, but may also mean a core network apparatus or a part (CU, DU, or RU) of the base station. The network node may include a combination of at least a part of the apparatus of the core network and at least a part of the base station.

A program causing a computer to execute each of the processing performed by the UE 100, the gNB 200, or a relay apparatus may be provided. The program may be recorded in a computer-readable medium. Use of the computer-readable medium enables the program to be installed on a computer. Here, the computer-readable medium on which the program is recorded may be a non-transitory recording medium. The non-transitory recording medium is not particularly limited, and may be, for example, a recording medium such as a CD-ROM or a DVD-ROM. Circuits for executing processing performed by the UE 100, the gNB 200, or the relay apparatus may be integrated, and at least a part of the UE 100, the gNB 200, or the relay apparatus may be implemented as a semiconductor integrated circuit (chipset, System on a chip (SoC)).

The functions achieved by the UE 100, the gNB 200 (the network node), or the relay apparatus may be implemented in a circuitry or processing circuitry programmed to perform the described functions, including a general-purpose processor, a special-purpose processor, an integrated circuit, application specific integrated circuits (ASICs, a central processing unit (CPU), a conventional circuit, and/or combinations thereof. The processor may include transistors and other circuits and may be considered a circuitry or a processing circuitry. The processor may be a programmed processor that executes a program stored in the memory. As used herein, a circuitry, a unit, means are hardware programmed to achieve, or hardware performing, the described functions. The hardware may be any hardware disclosed herein or any hardware programmed to achieve or known to perform the described functions. When the hardware is a processor that is considered to be a type of circuitry, the circuitry, means, or a unit is a combination of hardware and software used to configure the hardware and/or the processor.

The phrases "based on" and "depending on/in response to" used in the present disclosure do not mean "based only on" and "only depending on/in response to" unless specifically stated otherwise. The phrase "based on" means both "based only on" and "based at least in part on." The phrase "depending on" means both "only depending on" and "at least partially depending on." The terms "include," "comprise" and variations thereof do not mean "include only items stated" but instead mean "may include only items stated" or "may include not only the items stated but also other items." The term "or" used in the present disclosure is not intended to be "exclusive or." Any references to elements using designations such as "first" and "second" as used in the present disclosure do not generally limit the quantity or order of those elements. These designations may be used herein as a convenient method of distinguishing between two or more elements. Thus, a reference to first and second elements does not mean that only two elements may be employed there or that the first element needs to precede the second element in some manner. For example, when the English articles such as "a," "an," and "the" are added in the present disclosure through translation, these articles include the plural unless clearly indicated otherwise in context.

Embodiments have been described above in detail with reference to the drawings, but specific configurations are not limited to those described above, and various design variation can be made without departing from the gist of the present disclosure.

This application claims priority to US Provisional Patent Application No. 63/443083 (filed on February 3, 2023), the contents of which are incorporated herein by reference in their entirety.

### (4) Supplementary Note

Characteristic matters relating to the above-described embodiments are supplementally noted.

### Supplementary Note 1

A communication method used in a mobile communication system for providing a multicast/broadcast service (MBS), the communication method including:
receiving, by a user equipment in a radio resource control (RRC) connected state and having joined a multicast session, a point-to-multipoint (PTM) configuration for the multicast session on a dedicated control channel (DCCH) from a base station,
wherein receiving includes receiving, on the DCCH from the base station, the PTM configuration including an information element that is the same as an information element provided on a multicast control channel (MCCH) when the multicast session is activated.

### Supplementary Note 2

The communication method according to supplementary note 1, further including:
recognizing, by the user equipment, that the received PTM configuration information is configuration information for multicast reception.

### Supplementary Note 3

The communication method according to supplementary note 1 or 2, further including the steps of:
receiving, by the user equipment, the multicast session via a first multicast radio bearer (MRB); establishing, by the user equipment, a second MRB different from the first MRB, based on the PTM configuration; and
performing, by the user equipment, predetermined processing of switching from the first MRB to the second MRB depending on a result of comparison between a sequence number of an MBS packet received via the first MRB and a sequence number of an MBS packet received via the second MRB.

### Supplementary Note 4

The communication method according to supplementary note 3, wherein
the receiving of the PTM configuration includes receiving an RRC reconfiguration message comprising the PTM configuration, and
the performing of the predetermined processing includes transmitting a notification for the switching to the base station.

### Supplementary Note 5

The communication method according to supplementary note 3, wherein
the receiving of the PTM configuration includes receiving an RRC release message comprising the PTM configuration, and
the performing of the predetermined processing includes transitioning from the RRC connected state to the RRC inactive state.

### Supplementary Note 6

A communication method used in a mobile communication system for providing a multicast/broadcast service (MBS), the communication method including:
a receiving, by a user equipment in a radio resource control (RRC) connected state and having joined a multicast session, configuration information on a dedicated control channel (DCCH) from a base station,
wherein the receiving includes receiving, from the base station, configuration information relating to permission for multicast reception in an RRC inactive state when the multicast session is not yet activated.

### Supplementary Note 7

The communication method according to supplementary note 6, wherein
the configuration information includes an information element indicating monitoring of a multicast control channel (MCCH), and
the communication method further includes monitoring, by the user equipment, the MCCH, based on the information element.

### Supplementary Note 8

The communication method according to supplementary note 6 or 7, wherein
the configuration information includes an information element permitting the user equipment to request the base station to provide a multicast control channel (MCCH), and
the communication method further includes the steps of:
   detecting, by the user equipment, that the multicast session is activated; and
   requesting, by the user equipment, the base station to provide the MCCH when the MCCH is not provided from the base station at the time of the detecting.

### Supplementary Note 9

The communication method according to any one of supplementary notes 6 to 8, wherein
the configuration information includes an information element prohibiting the user equipment from transitioning to an RRC connected state in response to reception of a paging message indicating that the multicast session is activated.

### (5) Supplementary Note

### 1. Introduction

The work items for enhancing the MBS (eMBS) are intended to support the multicast reception by the UE in the inactive state as follows.

To define support for the multicast reception by the UE in the RRC inactive state [RAN 2, RAN 3] A PTM configuration for the UE that receives the multicast in the RRC inactive state [RAN 2]Investigation of the impact of mobility and state transition of the UE receiving the multicast in the RRC inactive state (seamless/lossless mobility is not a requirement) [RAN 2, RAN 3]

RAN 2 has discussed this purpose and reached a series of agreements.
Based on these agreements, The PTM configuration and mobility aspect for the multicast reception in the inactive state are discussed in this supplementary note.

### 2. Discussion

### 2.1 PTM Configuration Delivery

Rel-17 defines two delivery modes of a mode called "delivery mode 1" for a multicast session and a mode called "delivery mode 2" for a broadcast session. While, in the delivery mode 1, reception on the MTCH is configured with RRC reconfiguration only for UE in the connected state, in the delivery mode 2, reception on the MTCH is configured with the MCCH for all the UEs in the RRC state.

RAN 2# 119e has defined that these delivery modes are candidates for the multicast reception in the inactive state, i.e., option 1, option 2, and "MIX" of these options.

For the PTM configuration delivery, RAN 2 further studies the following solutions.
Option 1: Dedicated signaling
Option 2: Solution based on SIB + MCCH
"MIX" of options is not excluded.

RAN 2 #120 has reached an agreement to advance the "mixed approach".

The mixed approach is included and start as follows.
1. When the NW configures the UE to continue multicast reception in the inactive state, the NW provides the PTM configuration for the activated multicast session through RRC dedicated signaling to at least the serving cell (other cases need to be further studied).
2. The MCCH is used when the PTM configuration needs to be changed or when the PTM configuration needs to be indicated during transition beyond the serving cell/gNB. The state change during the session and other indications need to be further studied.
3. Assume that the UE can receive the multicast service after joining the session.
4. Whether the MCCH configuration is initially provided to the UE through the dedicated signaling needs to be further studied.

According to the above agreement item #1, the network configures the PTM configuration of the activated multicast session for the UE through the dedicated signaling. Since the multicast session is activated, the connected UE has already received the multicast session and is assumed to be able to continue receiving the multicast session after the UE transitions to inactive according to this PTM configuration.

In the present disclosure, the "mixed approach" agreed by RAN 2 means that the MCCH is used for updating the PTM configuration, etc., and thus, is close to the delivery mode 2 of Rel-17. In this sense, the dedicated signaling only provides the content of the MCCH (such as MBS Broadcast Configuration) rather than the Rel-17 dedicated multicast configuration (such as mrb-ToAddModList). Such dedicated signaling is useful to prevent the UE from monitoring the MCCH in the connected state and to minimize service interruption due to delayed MCCH acquisition after transitioning to the inactive state.

Proposal 1: RAN 2 should agree that dedicated signaling provides the content of the MCCH (i.e., MBS Broadcast Configuration) for the multicast reception in the inactive state.

On the other hand, since RAN 2 has agreed that the UE in the inactive state can start receiving the multicast session, that is, scenario 2 with the following agreement items is agreed, what can be configured for the inactivated multicast session is not clear.

In Rel-18, the multicast reception for the UE in the inactive state supports at least the following scenarios, based on the premise that the UE has already a valid PTM configuration.
- Scenario 1: The UE receives multicast in the connected state, enters the inactive state, and continues the multicast reception.
- Scenario 2: The UE joins a multicast session and is directed to the inactive state, and the UE starts receiving the multicast session.

The state change, such as a state change due to a service that is not provided in the inactive state, needs to be further studied.

The actual PTM configuration may not be provided for the inactivated multicast session, but may be provided once the multicast session is activated. In Rel-17, the UE in the inactive state transitions to the connected state upon receiving group paging for activating the multicast session. Therefore, some kind of indication may be provided through dedicated signaling in advance to allow the UE remaining in the inactive to use the PTM configuration acquired from the MCCH for the multicast session. Another approach is that such indication is provided by group paging as discussed in the following section.

Proposal 2: RAN 2 should discuss whether some kind of configuration is provided through dedicated signaling when the UE transitions to the inactive state before activating the multicast session.

The agreement item #2 above, i.e. the MCCH is used when the PTM configuration needs to be changed or when the PTM configuration needs to be indicated during transition beyond the serving cell/gNB. The session status changing and other indications are somewhat ambiguous. That is, whether the MCCH is used for indication or for providing the PTM configuration is ambiguous. Only for the indication, MCCH Change Notification may be meant. However, the MCCH provides the PTM configuration, e.g., updates the PTM configuration of the UE in the inactive state.

Proposal 3: RAN 2 should clarify whether the MCCH provides the PTM configuration to the multicast session of the UE in the inactive state, for example, when the PTM configuration is updated.

RAN 2 leaves "whether the MCCH configuration is initially provided to the UE through dedicated signaling" as an item required to be studied. The MCCH configuration means the SIB 20. Since the dedicated signaling provides the PTM configuration for the multicast reception in the inactive state as agreed by RAN 2, the UE does not need to read the MCCH immediately and the UE does not need to know which the SIB 20, i.e. the MCCH configuration, is. Of course, the UE later acquires the SIB 20 and the MCCH to confirm whether the PTM configuration has been updated.

Proposal 4: RAN2 should agree that the MCCH configuration (i.e., the SIB 20) does not need to be provided through dedicated signaling.

### 2.2. UE Mobility and Service Continuity

RAN 2 #120 has agreed that the MCCH is used during the UE transition.

The present disclosure has the mixed approach and starts as follows.
1. When the NW configures the UE to continue multicast reception in the inactive state, the NW provides the PTM configuration for the activated multicast session through RRC dedicated signaling to at least the serving cell (other cases need to be further studied).
2. The MCCH is used when the PTM configuration needs to be changed or when the PTM configuration needs to be indicated during transition beyond the serving cell/gNB. The state change during the session and other indications need to be further studied.
3. Assume that the UE can receive the multicast service after joining the session.
4. Whether the MCCH configuration is initially provided to the UE through the dedicated signaling needs to be further studied.

The WID states that seamless/lossless mobility is not required.

To define support for the multicast reception by the UE in the RRC inactive state [RAN 2, RAN 3] A PTM configuration for the UE that receives the multicast in the RRC inactive state [RAN 2]To investigate the impact of mobility and state transition of the UE receiving the multicast in the RRC inactive state (seamless/lossless mobility is not a requirement) [RAN 2, RAN 3]

As described in section 2.1., the delivery method of the new PTM configuration is similar to the delivery mode 2 of Rel-17. Therefore, it is natural to take the service continuation mechanism of Rel-17 MBS broadcast as a baseline. In this case, in the multicast session, it is necessary that neighbor cell information is first provided from the MCCH to confirm that the UE is permitted to prioritize the MBS frequency at the time of cell reselection.

It is up to the UE implementation how to ensure service continuity, as assumed in LTE SC-PTM and NR MBS broadcast. For example, how to use the neighbor cell information, whether to prioritize the MBS frequency, how/timing to acquire the MCCH from the neighbor cell, etc. are up to the UE implementation.

Proposal 5: RAN 2 should agree that the neighbor cell information of the multicast session is provided by the MCCH, in the same and/or similar way for the MBS broadcast.

Proposal 6: RAN 2 should agree that the UE is permitted to prioritize the MBS multicast frequency at the time of cell reselection, in the same and/or similar way for the MBS broadcast.

Some companies propose to enhance the service continuity during the UE transition by enabling the PTM configuration in a plurality of cells. The PTM configurations for the respective cells can be easily matched (if necessary) for the intra-gNB, but difficult for the inter-gNB and negotiation involving the Xn-AP is required. This small extension is not considered harmful for the intra-gNB with limitation. Therefore, RAN 2 needs to discuss whether the PTM configuration can be applied to a plurality of intra-gNB cells.

Proposal 7: RAN 2 should study whether the PTM configuration can be applied to a plurality of intra-gNB cells. In this case, an intra-gNB scenario is the basic assumption.

Another consideration is QoS control by the network. The WID states that the seamless/lossless mobility is not required, but this does not mean that all multicast sessions that the UE can receive in the inactive state require no seamless/lossless mobility. For example, due to congestion, the network needs to cause the UE to the inactive state, but due to QoS requirements, the UE needs to transition after connected. For the seamless/lossless mobility, handover in the RRC connection is supported in Rel-17 MBS multicast. Therefore, the network may need the option to control whether to cause the UE to perform the cell reselection or to resume the RRC connection before the cell reselection (for the handover in the connected state).

Proposal 8: RAN 2 should discuss whether the gNB can indicate whether the UE is permitted to perform inactive mode mobility before the cell reselection or to resume the RRC connection for better QoS control.

### (6) Supplementary Notes

### 1. Introduction

The work items for enhancing the MBS (eMBS) are as follows.

To specify support for the multicast reception by the UE in the RRC inactive state [RAN 2, AN 3] A PTM configuration for the UE that receives the multicast in the RRC inactive state [RAN 2]To investigate the impact of mobility and state transition for the UE receiving the multicast in the RRC inactive state (seamless/lossless mobility is not a requirement) [RAN 2, RAN 3]

Based on these agreements, the notification and RRC state transition aspects for the multicast reception in the inactive state are discussed in this supplementary note.

### 2. Discussion

RAN 2 #119e leaves an aspect relating to the RRC state change as an item required to be studied.

In Rel-18, the multicast reception for the UE in the inactive state supports at least the following scenarios, based on the premise that the UE has already a valid PTM configuration.
- Scenario 1: The UE receives multicast in the connected state, enters the inactive state, and continues the multicast reception.

Scenario 2: The UE joins a multicast session and is directed to the inactive state, and the UE starts receiving the multicast session.

The state change, such as changing due to a service that is not provided in the inactive state, needs to be further studied.

A plurality of cases relating to the RRC state change are considered from viewpoints of the network and the UE. Some of the cases also relate to the notification transmitted from the network to the UE. Therefore, the following cases are considered.

### 2.1. Case 1: Inactivation/Release of Multicast Session

The UE is notified of agreed RAN 2 #119bis-e when the multicast session is inactivated, and the Rel-17 mechanism is applicable hen the multicast session is released.

When the UE is in the RRC inactive state and is configured to receive the multicast session in the RRC inactive state, the UE is notified when the multicast session is inactivated. For example, the notifying via group paging, an MCCH, or other methods need to be further studied. The Rel-17 mechanism (NAS-based indication) is applicable for multicast session release. Further study is provided as needed.

When the UE in the inactive state receives the MBS service, and in response to this, the gNB can stop transmission of the PTM/MTCH, the multicast session is considered to be inactivated or released. In this case, assume that the UE has no reason for continuing to monitor the MTCH, but the UE does that as long as the PTM configuration is not removed. In terms of power saving of the UE, the monitoring the MTCH is desired to be stopped as soon as possible.

Observation 1: The UE continuing to monitor the PTM/MTCH even after the multicast session is stopped or released is inefficient from the viewpoint of power consumption of the UE.

Therefore, the behavior of the UE when the multicast session is inactivated should be clarified, i.e. the UE should be permitted to stop monitoring the MTCH when receiving a notification to inactivate the multicast session, regardless of how the notification is given. The UE, when receiving such a notification, should remain in the RRC inactive state.

Proposal 1: RAN 2 should agree that the UE, upon receiving a multicast session release notification, is permitted to stop monitoring the MTCH.

For the stopping of the multicast session, RAN 2 leaves the method of notifying the UE, such as the group paging, the MCCH, or other methods, as an item required to be studied.

According to LTE SC-PTM, to give a notification that the UE stops monitoring a PDCCH of a G-RNTI, an SC-PTM Stop Indication MAC CE is introduced, and the MAC CE is multiplexed on an SC-MTCH associated with the G-RNTI. This lightweight signaling may function under restriction of a one-to-one mapping between the TMGI and the G-RNTI. On the other hand, since many-to-one mapping between the TMGI and the G-RNTI is permitted for an NR MBS, the inactivated TMGI needs to be indicated when the MAC CE is introduced. Since the MAC CE is transmitted together with the MTCH, delay from reception of the last multicast data to stop of the MTCH monitoring is expected to be minimized.

Another option is to reuse the group paging. The group paging is used to simultaneously page a plurality of UEs in a group using the TMGI instead of a UE-ID. Since the existing paging group list (i.e., a list of TMGIs) can be applied to legacy UEs, the group paging needs to add a new TMGI list for deactivation notification to avoid an influence on the legacy UEs. That is, a delay occurs from when the last multicast data is receive until when the MTCH monitoring is stopped based on an I-DRX cycle.

The third option is to reuse the MCCH. There are two possibilities for the method of notifying of inactivation of the multicast session: deleting the PTM configuration of the inactivated TMGI or adding a new indication for notifying of the inactivated TMGI. In any case, since the MCCH needs to be updated, an MCCH change notification needs to be transmitted to the UE in advance. Hence, a longer delay is required from when the last multicast data is received until when the MTCH monitoring is stopped.

According to the RAN 2 agreement that "the MCCH is used when the PTM configuration needs to be changed", it can be interpreted that the UE in the inactive state needs to wake up at the timing of the MCCH, and the inactivation of the multicast session is regarded as a kind of "change of PTM configuration". Thus, when the corresponding PTM configuration is deleted from the MCCH, the UE may be aware that the multicast session has been inactivated. However, it takes time for the UE to stop monitoring the MTCH. Therefore, a notification by the MAC CE is desirable.

In summary, the delay from when the last multicast data is received until when the MTCH monitoring is stopped may directly affect an increase in unnecessary power consumption of the UE. From the viewpoint of power saving of the UE, the first option of using the MAC CE is a desirable solution since the notification needs to be transmitted as soon as possible.

Proposal 2: RAN 2 should agree that when the multicast session becomes inactive, the UE in the inactive state is notified of a new MAC CE (like the existing SC-PTM Stop Indication).

As for release of the multicast session, an NAS-based indication of Rel-17 agreed by RAN 2 applies, which may be "release of a multicast session requested by the network or release of the MBS session". This procedure assumes that the UE is paged by the gNB and transitions to the RRC connected state to communicate with the AMF. In this procedure, assume that existing group paging (or known dedicated paging) can be reused.

However, for optimization, when the new MAC CE is introduced for notification of the multicast session deactivation as in Proposal 2, this procedure can be freely used. That is, the gNB transmits the MAC CE to permit the UE to stop monitoring the MTCH, after that the gNB can distribute the timing of the pages to the UE, i.e., use legacy dedicated paging to avoid signaling storms caused by transitioning simultaneously to the RRC state.

Proposal 3: RAN 2 needs to agree that function extension specialized in multicast session release is not necessary, i.e., the UE transitions to the RRC connected state by existing (group) paging.

### 2.2. Case 2: Selective Transition upon Activation of Multicast Session

RAN 2 #119e has reached the following agreement relating to case 2.

The gNB determines whether the UE can receive a multicast session in the inactive state. What information is to be provided (in relation to the discussion of SA2) to the gNB to make such determination needs to be further studied.

It is supported that the gNB transmits one multicast session to UEs both in the connected state and the inactive state in the same cell. How the gNB configures this support needs to be further studied.

It is assumed that the network can select which UE would receive in the RRC inactive state and which UE would receive in the RRC connected state, and can cause the UE to transition between states for reception of the multicast service.

To release the UE to be inactive, the gNB may select the UE to release in the same manner as the current, that is, in RRC Release with Suspend Config., based on UE capabilities, UE assistance information, and/or CN assistance information (when defined). Therefore, with respect to RRC release messages, no enhancement for selective transitions of the UE is foreseen.

Observation 2: Existing RRC Release is used for the gNB to select which UE to release.

For activation of a multicast session, RAN 2 #119bis-e has agreed on the following items.

When a Rel-18 session is activated, the UE in the inactive state can be notified (details need to be further studies).

As a baseline, the group paging can be used to notify the Rel-18 UE of activation of a session (e.g., further study is necessary for details of an operation of the UE or the like at a time of the UE receiving such a group notification).

A method for determining whether the UE can receive a multicast session in the RRC inactive state when the session is activated is determined through further study in consideration of the following solutions (the description can be further updated as needed and a plurality of solutions may be necessary).
1. When a multicast session is activated, when the PTM configuration used in the RRC inactive state for the session can be used by the UE and the UE already joins the session (such as a configuration provided to the UE via dedicated RRC signaling or an MCCH), the UE can receive the multicast session in the RRC inactive state, otherwise returns to the RRC connected state and receives the multicast session.
2. When a multicast session is activated, whether the UE can receive the multicast session in the RRC inactive state is indicated by group paging (detailed signaling needs to be further studied).
3. "Whether the UE can receive a multicast session in the RRC inactive state" is configured by dedicated signaling for the UE before the UE is released. Once the multicast session is activated, the UE remains in the RRC inactive state or resumes the RRC connected state in response to the activation (detailed signaling needs to be further studied).

In Rel-17, activation of the multicast session is provided as notification through group paging. Since there is no need to be different from the legacy mechanism in Rel-18, RAN 2 needs to use the group paging to confirm that the UE is notified of the multicast session activation.

Proposal 4: RAN 2 needs to confirm that the group paging can be used to notify Rel-18 UE of activation of the session.

In addition to the confirmation, RAN 2 has defined three options for the operation of the UE at a time of receiving a multicast activation notification as mentioned above.

For option 1, the UE can receive the multicast session even in the inactive state when there exists a valid PTM configuration. The UE in the inactive state cannot receive a multicast session without the PTM configuration, which can be considered to be a baseline for all other UE operations. Hence, option 1 needs to be agreed upon.

Proposal 5: According to RAN 2, when operation option 1 of the UE multicast session is activated, when the PTM configuration used in the RRC inactive state for the session can be used by the UE, and the UE has already joined the session (a configuration provided to the UE through dedicated RRC signaling or an MCCH), the UE can receive the multicast session in the RRC inactive state.

For option 2, whether the UE needs to receive the multicast session in the inactive state is indicated at a time of the UE receiving the group paging.

For option 3, whether the UE needs to receive the multicast session in the inactive state is indicated in advance by the RRC reconfiguration or the RRC Release.

The mechanisms of these two options may be very similar except for a message indicating to do so to the UE. Therefore, these options can be analyzed from the viewpoint of the motivations for multicast reception in the inactive state, that is, the network congestion and the power saving of the UE.

For the network congestion, a cell load is assumed to change from time to time. According to option 2, since the notification is transmitted in the group paging, the gNB can consider the latest load situation when determining whether the UE should remain in the inactive state. On the other hand, according to option 3, since the gNB needs to predict a future load when providing a notification to the UE, there exists a possibility where the cell load is changed when the gNB actually transmits the group paging. Therefore, there exists a risk that the number of UEs that transition to the connected state increases when congestion worsens, or the number of UEs that remain in the inactive state increases even when the congestion is resolved. Therefore, option 2 is desirable to efficiently control the RRC state of the UE.

From the viewpoint of power saving of the UE, some "power saving preference" is assumed to be introduced into the UE assistance information. Such a preference indication can be transmitted only from the connected UE. Hence, the gNB can indicate to the UE whether the UE is permitted to receive a multicast session in the "inactive state" when the UE is previously in the connected state. When such a preference indication is not introduced, since the gNB does not know whether the UE prefers power saving, the gNB can indicate this indication to the UE at any time. That is, there exists no difference between option 2 and option 3.

In light of the above analysis, option 2 is considered to be more efficient and cover the usage of option 3. Therefore, RAN 2 needs to agree on at least option 2.

Proposal 6: RAN 2 needs to agree on a UE operation option 2 stating that "when a multicast session is activated, whether the UE can receive the multicast session in the RRC inactive state is indicated to the UE through group paging (detailed signaling needs to be further studied)".

With respect to option 2 group paging, the current specification defines the behavior of the UE upon receiving the group paging. Specifically, when the paging message includes a TMGI of interest, all UEs start the RRC resume procedure, and therefore when the selective paging is necessary for option 2, the gNB cannot include the TMGI in the paging message. When the gNB includes only the UE-ID for selective paging (i.e., legacy dedicated paging that is for paging the selected Rel-18 UE and that does not use the TMGI), the Rel-17 UE that waits for activation of multicast in the inactive state cannot be paged. This is also inefficient in terms of a signaling overhead.

Observation 3: That is, when the paging message includes the TMGI of interest, all UEs transition to the RRC connected state.

Assuming that a current paging group list is configured in the group paging message and at least the Rel-17 UE is paged, the Rel-18 UE is also paged through the TMGI of interest. Hence, in order that the selected UE does not transition to the connected state, it is considered to define "paging cancel list" (or "inactive permission list") that is a new list of UE-IDs to cause the UE listed in this list to remain in the inactive state to receive the multicast session.

Hence, RAN 2 needs to discuss a method for enhancing group paging to page a subset of UEs.

Proposal 7: RAN 2 needs to discuss a method for enhancing group paging for paging a subset of UEs using, for example, a new UE-ID list for remaining in the inactive state for reception of a multicast session.

### 2.2.3. Case 3: QoS Enforcement

RAN 2 #119e has reached the following agreement relating to case 3.

HARQ feedback and PTP are not supported for multicast reception in the RRC inactive state.

According to the agreement, the multicast reception in the inactive state is the same as and/or similar to the MBS broadcast reception defined in Rel-17 (so-called delivery mode 2). The MBS broadcast is of the best-effort type.

On the other hand, ensuring QoS/reliability is an important task for the multicast session. The SA2 has also questioned whether there exists a difference in the quality/reliability of the multicast reception between the connected state and the inactive state, and RAN 2 #119bis-e has agreed on the following answers. RAN 2 Q1-a When there exists a significant difference in quality and reliability of the MBS data reception between the UE in the RRC connected state and the UE in the RRC inactive state:
The quality and the reliability of the MBS data reception between the UE in the RRC connected state and the UE in the RRC inactive state may be different because the HARQ feedback and the PTP transmission are not supported, and the seamless/lossless mobility is not required for the multicast reception in the RRC inactive state.

RAN 2 #119e has proposed to introduce threshold values for reception quality such as RSRP and BLER, which are considered to be used to ensure a certain level of QoS requirement for multicast reception. The threshold values are also useful for the network to manage the QoS requirements. When the multicast reception in the inactive state does not meet the corresponding QoS requirement, the UE needs to transition to the connected state and ensure reception quality by using the HARQ feedback/retransmission and/or the PTP (or split MRB).

Observation 4: Even when the UE is in the inactive state, the multicast session needs to ensure a certain QoS requirement.

As for the threshold value for the RSRP, since the NR MBS assumes a single-cell transmission method, the UE is considered to be required to always transition to the connected state every time the UE moves to a cell edge or performs the cell reselection. This operation may not be an optimal operation depending on deployments from the viewpoint of the network congestion and the power saving of the UE.

The threshold values for BLER are considered to be simpler to ensure the QoS requirements. Therefore, these options need to be discussed to introduce transitions of the RRC states based on the reception quality.

Proposal 8: RAN 2 needs to agree that, when the reception quality becomes worse than the threshold value (such as the RSRP or the BLER), the UE in the inactive state should transition to the connected state.

### 2.4. Case 4: Update of PTM configuration

RAN 2 agreed upon the following as a working premise.

The present disclosure has the mixed approach and starts as follows.
1. When the NW configures the UE to continue multicast reception in the inactive state, the NW provides the PTM configuration for the activated multicast session through RRC dedicated signaling to at least the serving cell (other cases need to be further studied).
2. The MCCH is used when the PTM configuration needs to be changed or when the PTM configuration needs to be indicated during transition beyond the serving cell/gNB. The change of the session status and other indications need to be further studied.
3. Assume that the UE can receive the multicast service after joining the session.
4. Whether the MCCH configuration is initially provided to the UE through dedicated signaling needs to be further studied.

That is, the UE may maintain the inactive state to acquire the updated PTM configuration. Therefore, when viewed from the UE in the inactive state, the delivery method of the new PTM configuration is similar to the delivery mode 2 of Rel-17. In this case, the existing MCCH change notification is very easy to reuse to provide the notification of the PTM configuration update. Therefore, no additional notification is required for updating the PTM configuration for the UE in the inactive state.

Proposal 9: RAN 2 should agree that the existing MCCH change notification is used for updating the PTM configuration.

### 2.5. Case 5: Service Continuity upon RRC Resume

It is also conceivable that the UE already having received the multicast session in the inactive state (e.g. via the broadcast MRB) is paged and initiates the RRC resume procedure. After transitioning to the connected state, the UE of course wants to continue to receive the multicast session. However, in this case, the UE has the broadcast MRB and the resumed multicast MRB for the same multicast session. In Rel-17, reception of a multicast session only via a multicast MRB configured by an RRC reconfiguration is permitted. On the other hand, in Rel-18, reception of a multicast session via a broadcast MRB configured by an MCCH may be permitted. The UE should use the multicast MRB for reception after transitioning to the connected state. However, it is not clear how the UE switches these MRBs, when the UE discards the broadcast MRB, how the UE should do when the multicast MRB is an AM MRB (i.e., in lossless principle) and the like. Therefore, RAN 2 needs to discuss the operation of the UE upon RRC resume in terms of processing of the MRB and service continuity of the multicast session.

Proposal 10: RAN 2 should discuss the operation of the UE that is continuing to receive the multicast session upon RRC resume (such as processing of broadcast MRB and multicast MRB).

### REFERENCE SIGNS

1: Mobile communication system
5: Network
10: RAN
20: CN
100: User equipment (UE)
110: Receiver
120: Transmitter
130: Controller
200: gNB (Base station)
210: Transmitter
220: Receiver
230: Controller
240: Backhaul communicator

## Claims

1. A communication method used in a mobile communication system for providing a multicast/broadcast service (MBS), the communication method comprising:
receiving, by a user equipment in a radio resource control (RRC) connected state, a point-to-multipoint (PTM) configuration for a multicast session on a dedicated control channel (DCCH) from a base station,
wherein the receiving comprises receiving, on the DCCH from the base station, the PTM configuration comprising an information element that is the same as an information element provided on a multicast control channel (MCCH).

2. The communication method according to claim 1, further comprising:
recognizing, by the user equipment, that the received PTM configuration information is configuration information for multicast reception.

3. The communication method according to claim 1, further comprising the steps of:
receiving, by the user equipment, the multicast session via a first multicast radio bearer (MRB);
establishing, by the user equipment, a second MRB different from the first MRB, based on the PTM configuration; and
performing, by the user equipment, predetermined processing of switching from the first MRB to the second MRB depending on a result of comparison between a sequence number of an MBS packet received via the first MRB and a sequence number of an MBS packet received via the second MRB.

4. The communication method according to claim 3, wherein
the receiving of the PTM configuration comprises receiving an RRC reconfiguration message comprising the PTM configuration, and
the performing of the predetermined processing comprises transmitting a notification for the switching to the base station.

5. The communication method according to claim 3, wherein
the receiving of the PTM configuration comprises receiving an RRC release message comprising the PTM configuration, and
the performing of the predetermined processing comprises transitioning from the RRC connected state to the RRC inactive state.

6. A communication method used in a mobile communication system for provides a multicast/broadcast service (MBS), the communication method comprising:
receiving, by a user equipment in a radio resource control (RRC) connected state and having joined a multicast session, configuration information on a dedicated control channel (DCCH) from a base station,
wherein the receiving comprises receiving, from the base station, configuration information relating to permission for multicast reception in an RRC inactive state when the multicast session is not yet activated.

7. The communication method according to claim 6, wherein
the configuration information comprises an information element indicating monitoring of a multicast control channel (MCCH), and
the communication method further comprises monitoring, by the user equipment, the MCCH based on the information element.

8. The communication method according to claim 6, wherein
the configuration information comprises an information element permitting the user equipment to request the base station to provide a multicast control channel (MCCH), and
the communication method further comprises the steps of:
detecting, by the user equipment, that the multicast session is activated; and
requesting, by the user equipment, the base station to provide the MCCH when the MCCH is not provided from the base station at the time of the detecting.

9. The communication method according to any one of claims 6 to 8, wherein
the configuration information comprises an information element prohibiting the user equipment from transitioning to an RRC connected state in response to reception of a paging message indicating that the multicast session is activated.
